# EUROPEAN PATENT SPECIFICATION

(11) **EP 0 648 667 B1**
(45) Date of publication and mention of the grant of the patent: **21.01.1998**
(21) Application number: 94115980.8
(22) Date of filing: 11.10.1994
(51) Int. Cl.: B62K 15/00

(54) **Foldable frame for vehicles with two or more wheels**
Zusammenklappbarer Rahmen für Zweirad- und Dreiradfahrzeug
Cadre pliable pour véhicule à deux ou trois roues

(30) Priority: 14.10.1993 IT FI930204
(43) Date of publication of application: 19.04.1995
(73) Proprietor: DI BLASI INDUSTRIALE S.r.l., I-95049 Vizzini (Catania) (IT)
(72) Inventor: Di Blasi, Carmelo, I-96015 Francofonte (Siracusa) (IT); Di Blasi, Carlo Maria, I-96015 Francofonte (Siracusa) (IT)
(74) Representative: Gervasi, Gemma, Dr.

(56) References cited:
- EP-A- 0 058 522
- EP-A- 0 263 554
- GB-A- 1 571 849
- US-A- 4 284 288

## Description

### The field of the invention

The present invention relates to a foldable frame to be used in a vehicle with two or more wheels which is driven either by an engine or by muscle power.

By means of the frame which is the object of the present invention, it is possible to realize a foldable vehicle in such a way that if necessary the bulk of the same vehicle may be reduced in order for example to be transported in the boot of a car.

### State of the Art

In the art, it is well known that foldable frames may be used for the construction of bicycles or motorcycles.

For example, in US Patent No. 3,887,218 a foldable vehicle is considered having a frame with at least a first articulated quadrilateral connected by means of at least one lever to a seat mounted on a second articulated quadrilateral; moving the seat downwards causes the first articulated quadrilateral to move and this results in the back wheel of the vehicle being moved inwards. The handlebar is foldable whereas the front wheel is fixed in place. Despite the definite advantages due to the ease with which the back part of the frame can be folded, nonetheless it is not possible to reduce the bulk to an absolute minimum since the front wheel cannot be displaced.

In the French patent application FR 2 173 683 (P. Herry) a bicycle is considered wherein the back wheel can be displaced when the frame is folded inwards while the front wheel can be rotated about the axis of the handlebar. Tile back wheel is moved by means of a connecting rod device which is used to rotate the back fork. The distance between the rotation axis of the back wheel and the pivot of the pedals is modified by the folding operation and it is therefore necessary to add a device in order to keep the chain taut even when the frame is folded.

The European Patent Application EP-A-0 263 554 shows a foldable frame for vehicles with two or more wheels, comprising a front fork, connected to a head tube (coaxial to the steering column) by means of a first hinge and a handlebar connected to said head tube by means of a second hinge.

### Summary of the invention

The present invention relates to a foldable frame for vehicles with two or more wheels as that shown by the European Patent Application EP-A-0 263 554, further comprising a connecting rod hinged to said handlebar and to said fork and apt to fold the fork when folding the handlebar.

The present invention relates moreover to a device for blocking the handlebar in use position, consisting of a hook stressed by a spring.

Using the present invention it is possible to achieve a considerable reduction in the bulk of the frame when it is folded.

### List of figures

Figure 1 shows the front part of a frame, according to the present invention in use position;
Figure 2 shows the frame in figure 1 in folded up position;
Figure 3 shows the blocking hook of the handlebar of the frame shown in figures 1 and 2.

### Detailed description of the invention

With reference to the above mentioned figures, 1 illustrates the front part of a normal bicycle frame with the steering column 2, inside of which there is the coaxial head tube 3. The lower extremity of the head tube 3 is integral with a plate 4 on which at 5 is hinged the head 6 of the front fork 7 on which is mounted the wheel 8. The front of plate 4 is integral with plate 9 which is parallel to the head tube 3. The upper extremity of plate 9 is connected by means of screws 10 to the front of a plate 11 (parallel to plate 4) which in turn is integral with the head tube 3 at the upper end of the latter, said plate 11 being blocked by the nut 12 of the steering mechanism.

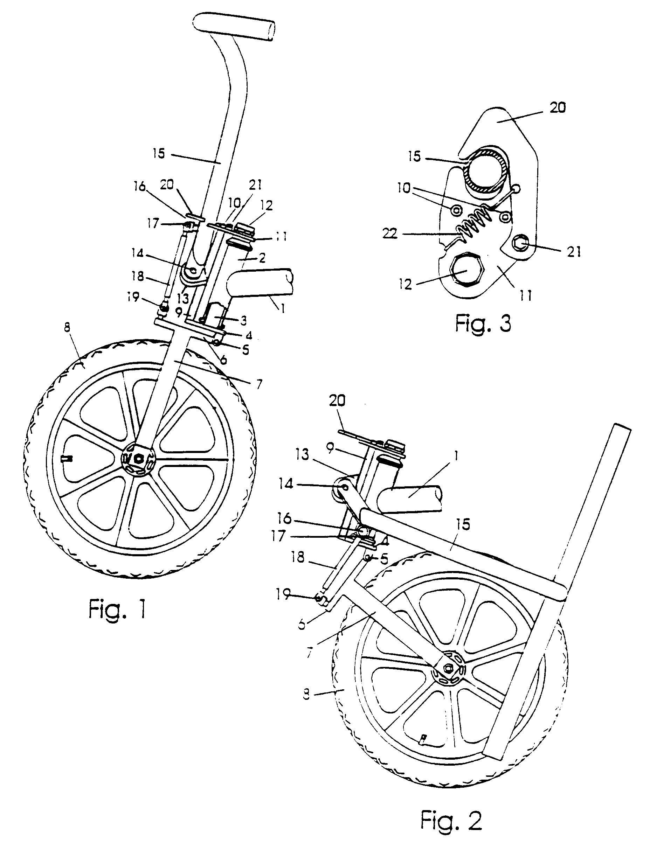

The lower extremity of the steering column 15 is hinged at 14 to a lug 13 of the plate 9. The axis of this hinge is tilted in such a way that the handlebar may rotate between two terminal positions: from the use position (figure 1) to the folded position where it is drawn alongside the central part of the frame (figure 2).

The upper extremity of a connecting rod 18 is hinged with an articulated joint 17 to a lug 16 on the steering column 15. The lower extremity of this connecting rod 18 is hinged, using another articulated joint 19, to the front part of the head 6 of the front fork 7. This connection between the handlebar 15 and the head 6 of the front fork 7 makes it possible for both elements 15, 7 to rotate each on its own axis, so that when the handlebar 15 is in use position, the fork 7 is also forced into use position (figure 1), whereas when the handlebar 15 is folded in the minimum bulk position, then the front fork 7 is also folded back in order to reduce the longitudinal bulk of the bicycle (figure 2).

By concluding: if the handlebar 15 is made to rotate about the hinge 14 the connecting rod 18 is also moved which in turn folds back the front fork 7.

With reference to figure 3, the handlebar 15 in use position is blocked in place by hook 20 hinged at 21 to the plate 11 and forced to remain hooked into position by the pull of the spring 22.

The foldable frame which is the object of the present invention may be profitably combined with any device whatsoever for the movement of the back wheel in order to further reduce the bulk when folded up.

Although in the aforesaid it has been described a foldable frame for bicycles, similar considerations may be taken into account for a frame to be used in any type of vehicle whatsoever with two or more wheels, particularly for a motorcycle.

## Claims

1. Foldable frame for vehicles with two or more wheels comprising:
a) a front fork (7), connected to a head tube (3) by means of a first hinge (5);
b) a handlebar (15) connected to said head tube (3) by means of a second hinge (14);
characterised by further comprising a connecting rod (18) connected by means of a first articulated joint (17) to said handlebar (15) and by means of a second articulated joint (19) to said front fork (7), designed to fold said front fork (7) when folding said handlebar (15).

2. Foldable frame according to claim 1, wherein in use position the handlebar (15) is blocked by a hook (20) stressed by a spring (22).

## Patentansprüche

1. Klappbare Gabel für Fahrzeuge mit zwei oder mehr Rädern, umfassend:
a) eine Vordergabel (7), die mittels eines ersten Drehgelenks (5) mit einem Lenkstangenschaft (3) verbunden ist,
b) eine Lenkstange (15), die mittels eines zweiten Drehgelenks (14) mit dem Lenkstangenschaft (3) verbunden ist,
dadurch gekennzeichnet, daß sie ferner eine Verbindungsstange (18) umfaßt, die mittels eines ersten Gelenks (17) mit der Lenkstange (15) und mittels eines zweiten Gelenks (19) mit der Vordergabel (7) verbunden und ausgestaltet ist, um beim Umlegen der Lenkstange (15) die Vordergabel (7) zu klappen.

2. Klappbare Gabel nach Anspruch 1, bei der in der Benutzungsstellung die Lenkstange (15) durch einen mittels einer Feder (22) belasteten Haken (20) blockiert ist.

## Revendications

1. Cadre pliable pour véhicules à deux roues ou plus, comprenant :
(a) une fourche avant (7) reliée à un tube de tête (3) au moyen d'une première articulation (5) ;
(b) un guidon (15) relié audit tube de tête (3) au moyen d'une deuxième articulation (14) ;
caractérisé en ce qu'il comprend en outre une tige de liaison (18) connectée par un premier joint articulé (17) audit guidon (15) et par un deuxième joint articulé (19) à ladite fourche avant (7), et agencée de manière à plier ladite fourche avant (7) lorsqu'on plie ledit guidon (15).

2. Cadre pliable suivant la revendication 1, dans lequel, en utilisation, la position du guidon (15) est bloquée par un crochet (20) sollicite par un ressort (22).
